# EUROPEAN PATENT APPLICATION

(11) **EP 3 024 264 A1**
(43) Date of publication of application: **25.05.2016**
(21) Application number: 13893064.9
(22) Date of filing: 05.09.2013
(51) Int. Cl.: H04W 16/10

(54) **MULTI-CHANNEL-BASED DATA SENDING METHOD AND DEVICE**

(71) Applicant: Huawei Technologies Co., Ltd., Longgang District Shenzhen, Guangdong 518129 (CN)
(72) Inventor: LI, Yunbo, Shenzhen Guangdong 518129 (CN)
(74) Representative: Epping - Hermann - Fischer
(86) International application number: PCT/CN2013/082971
(87) International publication number: WO 2015/032045

(57) **Abstract**

The present invention relates to a multi-channel-based data sending method and apparatus. The multi-channel-based data sending method includes: determining an available channel(s); determining, according to a priority of to-be-sent data, a quantity of channels allowed to be used by the to-be-sent data, where the priority of the to-be-sent data is proportional to the quantity of channels allowed to be used; and selecting a channel(s) from the available channel(s) to send an initial frame corresponding to the to-be-sent data, where a quantity of channel(s) does not exceed the quantity of channels allowed to be used.

## Description

### TECHNICAL FIELD

The present invention relates to the field of communications technologies, and in particular, to a multi-channel-based data sending method and apparatus.

### BACKGROUND

To enhance a quality of service (Quality of Service, QoS) feature of a communications system, enhanced distributed channel access (Enhanced Distributed Channel Access, EDCA) is introduced into the IEEE802.11e Standard. A basic principle of the enhanced distributed channel access is to classify service into four different service types in descending order of priorities of communications data: access category of voice (Access Category of Voice, AC_VO), access category of video (Access Category of Video, AC_VI), access category of best effect (Access Category of Best Effect, AC_BE), and access category of background (Access Category of Background, AC_BK). A higher priority of a service type requires a shorter time of waiting for a channel to be idle before backoff and a shorter backoffwindow. In this way, a high QoS service, such as a voice service, that requires a short delay time may be allocated as a service type with a high priority (for example, AC_VO). A service, such as file downloading, that has a low requirement for delay may be allocated as a service type with a lower priority (for example, AC_BE). Compared with a low priority service, a high priority service has an obvious access advantage, so that a delay of the high priority service can be better ensured.

However, the EDCA is more effective in a case in which a quantity of stations in a communications system is relatively small. However, when the quantity of stations in the communications system becomes increasingly large, a probability of collision between multiple stations may increase, especially when there are too many users who use a high priority service. Because a backoff window of the high priority service is smaller, a collision situation may be severer.

A method to resolve this problem is to change a current single-channel access manner of a wireless local access network (Wireless Local Access Network, WLAN) into a multi-channel access manner. A specific multi-channel division manner may have multiple methods, for example, an entire communications channel is divided into multiple orthogonal channels in an orthogonal frequency division multiple access (Orthogonal Frequency Division Multiple Access, OFDMA) manner. For another example, each 20MHz in a communication band is used as a channel. In a multi-channel access system, a probability of collision on each channel may be reduced by distributing user equipments to multiple channels.

However, in the current multi-channel access system, a station can only choose one channel to perform data sending at one time, if the sending fails, the station needs to wait for a relatively long time to send data again, so that a sending delay of data increases, especially for data with a high priority; a long sending delay of the data with a high priority can affect QoS of an entire communications system.

### SUMMARY

In view of this, the present invention provides a multi-channel-based data sending method and apparatus, which can effectively reduce a sending delay of data with a high priority, thereby improving QoS of a communications system.

In a first aspect, an embodiment of the present invention provides a multi-channel-based data sending method, and the method includes:
determining an available channel(s);
determining, according to a priority of to-be-sent data, a quantity of channels allowed to be used by the to-be-sent data, where the priority of the to-be-sent data is proportional to the quantity of channels allowed to be used; and
selecting a channel(s) from the available channel(s) to send an initial frame corresponding to the to-be-sent data, where a quantity of channel(s) does not exceed the quantity of channels allowed to be used.

In a first possible implementation manner of the first aspect, the determining an available channel(s) is specifically: listening for all channels, and determining a currently-idle channel(s) that has completed execution of a backoff process as the available channel(s); or receiving a channel scheduling instruction sent by a scheduler, and determining a channel(s) indicated by the channel scheduling instruction as the available channel.

With reference to the first aspect or the first possible implementation manner of the first aspect, in a second possible implementation manner, the selecting a channel(s) from the available channel(s) to send an initial frame corresponding to the to-be-sent data is specifically: sending, on the selected channel(s), one or more identical initial frames corresponding to the to-be-sent data.

With reference to the first aspect or the first possible implementation manner of the first aspect or the second possible implementation manner of the first aspect, in a third possible implementation manner, an initial frame does not carry the to-be-sent data, or carries a part of the to-be-sent data, or carries all of the to-be-sent data; when the initial frame does not carry the to-be-sent data, after the selecting a channel(s) from the available channel(s) to send an initial frame corresponding to the to-be-sent data, the method further includes: if the initial frame is successfully sent, sending the to-be-sent data on the channel on which the initial frame is sent; and when the initial frame carries a part of the to-be-sent data, after the selecting a channel(s) from the available channel(s) to send an initial frame corresponding to the to-be-sent data, the method further includes: if the initial frame is successfully sent, sending, on the channel on which the initial frame is sent, data that is not carried in the initial frame and that is in the to-be-sent data.

In a second aspect, an embodiment of the present invention provides a multi-channel-based data sending method, and the method includes:
selecting an available channel;
sending, on the available channel, an initial frame corresponding to to-be-sent data;
determining whether a sending state of the initial frame meets a preset condition; and
stopping sending the initial frame if the sending state of the initial frame meets the preset condition; reselecting an available channel and sending the initial frame on the reselected available channel, if the sending state of the initial frame does not meet the preset condition.

In a first possible implementation manner of the second aspect, the preset condition includes that the initial frame is successfully sent.

With reference to the first possible implementation manner of the second aspect, in a second possible implementation manner, the preset condition further includes at least one of the following conditions: a quantity of sending times of the initial frame reaches a preset quantity of sending times; and a time during which the initial frame occupies the available channel exceeds a preset time threshold; the stopping sending the initial frame if the sending state of the initial frame meets the preset condition is specifically: stopping sending the initial frame if the sending state of the initial frame meets at least one condition included in the preset condition; and the reselecting an available channel and sending the initial frame on the reselected available channel, if the sending state of the initial frame does not meet the preset condition is specifically: reselecting an available channel and sending the initial frame on the reselected available channel, if the sending state of the initial frame does not meet all conditions included in the preset condition.

With reference to the second possible implementation manner of the second aspect, in a third possible implementation manner, before the determining whether a sending state of the initial frame meets a preset condition, the method further includes: setting the quantity of sending times according to a priority of the to-be-sent data, where the priority of the to-be-sent data is proportional to the quantity of sending times.

With reference to the second aspect or the first possible implementation manner of the second aspect or the second possible implementation manner of the second aspect or the third possible implementation manner of the second aspect, in a fourth possible implementation manner, the selecting an available channel is specifically: listening for all channels, and selecting a channel from a currently-idle channel(s) that has completed execution of a backoff process as the available channel; or receiving a channel scheduling instruction sent by a scheduler, and selecting a channel from a channel(s) indicated by the channel scheduling instruction as the available channel.

With reference to the second possible implementation manner of the second aspect, in a fifth possible implementation manner, before the selecting an available channel, the method further includes: determining, according to a priority of the to-be-sent data, a quantity of channels allowed to be used by the to-be-sent data, where the priority of the to-be-sent data is proportional to the quantity of channels allowed to be used; and before the determining whether a sending state of the initial frame meets a preset condition, the method further includes: setting the quantity of sending times to the quantity of channels allowed to be used.

With reference to the fifth possible implementation manner of the second aspect, in a sixth possible implementation manner, the selecting an available channel is specifically: selecting a channel(s), where a quantity of channel(s) does not exceed the quantity of channels allowed to be used; and listening for the channel(s), and selecting, from the channel(s), a currently-idle channel that has completed execution of a backoffprocess as the available channel; or sending a scheduling request to a scheduler, where the scheduling request carries the quantity of channels allowed to be used; and receiving a channel scheduling instruction sent by the scheduler, and selecting a channel(s) from a channel indicated by the channel scheduling instruction as the available channel, where a quantity of channel(s) indicated by the channel scheduling instruction does not exceed the quantity of channels allowed to be used.

With reference to the first possible implementation manner of the second aspect or the second possible implementation manner of the second aspect or the third possible implementation manner of the second aspect or the fourth possible implementation manner of the second aspect or the fifth possible implementation manner of the second aspect or the sixth possible implementation manner of the second aspect, in a seventh possible implementation manner, the initial frame does not carry the to-be-sent data, or carries a part of the to-be-sent data, or carries all of the to-be-sent data; when the initial frame does not carry the to-be-sent data, after the determining whether a sending state of the initial frame meets a preset condition, the method further includes: if the initial frame is successfully sent, sending the to-be-sent data on the channel on which the initial frame is sent; and when the initial frame carries a part of the to-be-sent data, after the determining whether a sending state of the initial frame meets a preset condition, the method further includes: if the initial frame is successfully sent, sending, on the channel on which the initial frame is sent, data that is not carried in the initial frame and that is in the to-be-sent data.

In a third aspect, an embodiment of the present invention provides a multi-channel-based data sending apparatus, and the apparatus includes:
a first determining unit, configured to determine an available channel(s);
a second determining unit, configured to determine, according to a priority of to-be-sent data, a quantity of channels allowed to be used by the to-be-sent data, where the priority of the to-be-sent data is proportional to the quantity of channels allowed to be used; and
a sending unit, configured to select a channel(s) from the available channel(s) to send an initial frame corresponding to the to-be-sent data, where a quantity of channel(s) does not exceed the quantity of channels allowed to be used.

In a first possible implementation manner of the third aspect, the first determining unit is specifically configured to: listen for all channels, and determine a currently-idle channel(s) that has completed execution of a backoff process as the available channel(s); or receive a channel scheduling instruction sent by a scheduler, and determine a channel(s) indicated by the channel scheduling instruction as the available channel(s).

With reference to the third aspect or the first possible implementation manner of the third aspect, in a second possible implementation manner, the sending unit is specifically configured to send, on the selected channel(s), one or more identical initial frames corresponding to the to-be-sent data.

With reference to the third aspect or the first possible implementation manner of the third aspect or the second possible implementation manner of the third aspect, in a third possible implementation manner, an initial frame does not carry the to-be-sent data, or carries a part of the to-be-sent data, or carries all of the to-be-sent data; the sending unit is further configured to: when the initial frame does not carry the to-be-sent data and if the initial frame is successfully sent, send the to-be-sent data on the channel on which the initial frame is sent; and the sending unit is further configured to: when the initial frame carries a part of the to-be-sent data and if the initial frame is successfully sent, send, on the channel on which the initial frame is sent, data that is not carried in the initial frame and that is in the to-be-sent data.

In a fourth aspect, an embodiment of the present invention provides a multi-channel-based data sending apparatus, and the apparatus includes:
a selecting unit, configured to select an available channel;
a sending unit, configured to send, on the available channel, an initial frame corresponding to to-be-sent data; and
a judgment unit, configured to: determine whether a sending state of the initial frame meets a preset condition; where
if the sending state of the initial frame meets the preset condition, sending of the initial frame is stopped; and if the sending state of the initial frame does not meet the preset condition, the selecting unit reselects an available channel and the sending unit sends the initial frame on the reselected available channel.

In a first possible implementation manner of the fourth aspect, the preset condition includes that the initial frame is successfully sent.

With reference to the first possible implementation manner of the fourth aspect, in a second possible implementation manner, the preset condition further includes at least one of the following conditions: a quantity of sending times of the initial frame corresponding to the to-be-sent data reaches a preset quantity of sending times; and a time during which the initial frame corresponding to the to-be-sent data occupies the available channel exceeds a preset time threshold; that the sending state of the initial frame meets the preset condition is specifically that the sending state of the initial frame meets at least one condition included in the preset condition; and that the sending state of the initial frame does not meet the preset condition is specifically that the sending state of the initial frame does not meet all conditions included in the preset condition.

With reference to the second possible implementation manner of the fourth aspect, in a third possible implementation manner, the apparatus further includes a setting unit that is configured to set the quantity of sending times according to a priority of the to-be-sent data, where the priority of the to-be-sent data is proportional to the quantity of sending times.

With reference to the fourth aspect or the first possible implementation manner of the fourth aspect or the second possible implementation manner of the fourth aspect or the third possible implementation manner of the fourth aspect, in a fourth possible implementation manner, the selecting unit is specifically configured to: listen for all channels, and select a channel from a currently-idle channel(s) that has completed execution of a backoff process as the available channel; or receive a channel scheduling instruction sent by a scheduler, and select a channel from a channel(s) indicated by the channel scheduling instruction as the available channel.

With reference to the second possible implementation manner of the fourth aspect, in a fifth possible implementation manner, the apparatus further includes: a determining unit, configured to determine, according to a priority of the to-be-sent data, a quantity of channels allowed to be used by the to-be-sent data, where the priority of the to-be-sent data is proportional to the quantity of channels allowed to be used; and a setting unit, configured to set the quantity of sending times to the quantity of channels allowed to be used.

With reference to the fifth possible implementation manner of the fourth aspect, in a sixth possible implementation manner, the selecting unit is specifically configured to: select a channel(s), where a quantity of channel(s) does not exceed the quantity of channels allowed to be used; and listen for the channel(s), and select, from the channel(s), a currently-idle channel that has completed execution of a backoff process as the available channel; or send a scheduling request to a scheduler, where the scheduling request carries the quantity of channels allowed to be used; receive a channel scheduling instruction sent by the scheduler, and select a channel(s) from a channel indicated by the channel scheduling instruction as the available channel, where a quantity of channel(s) indicated by the channel scheduling instruction does not exceed the quantity of channels allowed to be used.

With reference to the first possible implementation manner of the fourth aspect or the second possible implementation manner of the fourth aspect or the third possible implementation manner of the fourth aspect or the fourth possible implementation manner of the fourth aspect or the fifth possible implementation manner of the fourth aspect or the sixth possible implementation manner of the fourth aspect, in a seventh possible implementation manner, the initial frame does not carry the to-be-sent data, or carries a part of the to-be-sent data, or carries all of the to-be-sent data; the sending unit is further configured to: when the initial frame does not carry the to-be-sent data and if the initial frame is successfully sent, send the to-be-sent data on the channel on which the initial frame is sent; and the sending unit is further configured to: when the initial frame carries a part of the to-be-sent data and if the initial frame is successfully sent, send, on the channel on which the initial frame is sent, data that is not carried in the initial frame and that is in the to-be-sent data.

In a fifth aspect, an embodiment of the present invention provides a station, where the station includes:
a processor; and
a memory, where
the memory is configured to store program code, and the processor is configured to invoke the program code in the memory so as to perform the following operations:
   determining an available channel(s);
   determining, according to a priority of to-be-sent data, a quantity of channels allowed to be used by the to-be-sent data, where the priority of the to-be-sent data is proportional to the quantity of channels allowed to be used; and
   selecting a channel(s) from the available channel(s) to send an initial frame corresponding to the to-be-sent data, where a quantity of channel(s) does not exceed the quantity of channels allowed to be used.

In a first possible implementation manner of the fifth aspect, the determining an available channel is specifically: listening for all channels, and determining a currently-idle channel(s) that has completed execution of a backoff process as the available channel(s); or receiving a channel scheduling instruction sent by a scheduler, and determining a channel(s) indicated by the channel scheduling instruction as the available channel(s).

With reference to the fifth aspect or the first possible implementation manner of the fifth aspect, in a second possible implementation manner, the selecting a channel(s) from the available channel(s) to send an initial frame corresponding to the to-be-sent data is specifically: sending, on the selected channel(s), one or more identical initial frames corresponding to the to-be-sent data.

With reference to the fifth aspect or the first possible implementation manner of the fifth aspect or the second possible implementation manner of the fifth aspect, in a third possible implementation manner, an initial frame does not carry the to-be-sent data, or carries a part of the to-be-sent data, or carries all of the to-be-sent data; when the initial frame does not carry the to-be-sent data, after the selecting a channel(s) from the available channel(s) to send an initial frame corresponding to the to-be-sent data, the processor invokes the program code in the memory so as further to perform the following operation: if the initial frame is successfully sent, sending the to-be-sent data on the channel on which the initial frame is sent; and when the initial frame carries a part of the to-be-sent data, after the selecting a channel(s) from the available channel(s) to send an initial frame corresponding to the to-be-sent data, the processor invokes the program code in the memory so as further to perform the following operation: if the initial frame is successfully sent, sending, on the channel on which the initial frame is sent, data that is not carried in the initial frame and that is in the to-be-sent data.

In a sixth aspect, an embodiment of the present invention provides a station, where the station includes:
a processor; and
a memory, where
the memory is configured to store program code, and the processor is configured to invoke the program code in the memory so as to perform the following operations:
   selecting an available channel;
   sending, on the available channel, an initial frame corresponding to to-be-sent data;
   determining whether a sending state of the initial frame meets a preset condition; and
   stopping sending the initial frame if the sending state of the initial frame meets the preset condition; reselecting an available channel and sending the initial frame on the reselected available channel, if the sending state of the initial frame does not meet the preset condition.

In a first possible implementation manner of the sixth aspect, the preset condition includes that the initial frame is successfully sent.

With reference to the first possible implementation manner of the sixth aspect, in a second possible implementation manner, the preset condition further includes at least one of the following conditions: a quantity of sending times of the initial frame corresponding to the to-be-sent data reaches a preset quantity of sending times; and a time during which the initial frame corresponding to the to-be-sent data occupies the available channel exceeds a preset time threshold; the stopping sending the initial frame if the sending state of the initial frame meets the preset condition is specifically: stopping sending the initial frame if the sending state of the initial frame meets at least one condition included in the preset condition; and the reselecting an available channel and sending the initial frame on the reselected available channel, if the sending state of the initial frame does not meet the preset condition is specifically: reselecting an available channel and sending the initial frame on the reselected available channel, if the sending state of the initial frame does not meet all conditions included in the preset condition.

With reference to the second possible implementation manner of the sixth aspect, in a third possible implementation manner, before the determining whether a sending state of the initial frame meets a preset condition, the processor invokes the program code in the memory so as further to perform the following operation: setting the quantity of sending times according to a priority of the to-be-sent data, where the priority of the to-be-sent data is proportional to the quantity of sending times.

With reference to the sixth aspect or the first possible implementation manner of the sixth aspect or the second possible implementation manner of the sixth aspect or the third possible implementation manner of the sixth aspect, in a fourth possible implementation manner, the selecting an available channel is specifically: listening for all channels, and selecting a channel from a currently-idle channel(s) that has completed execution of a backoff process as the available channel; or receiving a channel scheduling instruction sent by a scheduler, and selecting a channel(s) from a channel indicated by the channel scheduling instruction as the available channel.

With reference to the second possible implementation manner of the sixth aspect, in a fifth possible implementation manner, before the selecting an available channel, the processor invokes the program code in the memory so as further to perform the following operation: determining, according to a priority of the to-be-sent data, a quantity of channels allowed to be used by the to-be-sent data, where the priority of the to-be-sent data is proportional to the quantity of channels allowed to be used; and before the determining whether a sending state of the initial frame meets a preset condition, the processor invokes the program code in the memory so as further to perform the following operation: setting the quantity of sending times to the quantity of channels allowed to be used.

With reference to the fifth possible implementation manner of the sixth aspect, in a sixth possible implementation manner, the selecting an available channel is specifically: selecting a channel(s), where a quantity of channel(s) does not exceed the quantity of channels allowed to be used; and listening for the channel(s), and selecting, from the channel(s), a currently-idle channel that has completed execution of a backoffprocess as the available channel; or sending a scheduling request to a scheduler, where the scheduling request carries the quantity of channels allowed to be used; receiving a channel scheduling instruction sent by the scheduler, and selecting a channel from a channel(s) indicated by the channel scheduling instruction as the available channel, where a quantity of channel(s) indicated by the channel scheduling instruction does not exceed the quantity of channels allowed to be used.

With reference to the first possible implementation manner of the sixth aspect or the second possible implementation manner of the sixth aspect or the third possible implementation manner of the sixth aspect or the fourth possible implementation manner of the sixth aspect or the fifth possible implementation manner of the sixth aspect or the sixth possible implementation manner of the sixth aspect, in a seventh possible implementation manner, the initial frame does not carry the to-be-sent data, or carries a part of the to-be-sent data, or carries all of the to-be-sent data; when the initial frame does not carry the to-be-sent data, after the determining whether a sending state of the initial frame meets a preset condition, the processor invokes the program code in the memory so as further to perform the following operation: if the initial frame is successfully sent, sending the to-be-sent data on the channel on which the initial frame is sent; and when the initial frame carries a part of the to-be-sent data, after the determining whether a sending state of the initial frame meets a preset condition, the processor invokes the program code in the memory so as further to perform the following operation: if the initial frame is successfully sent, sending, on the channel on which the initial frame is sent, data that is not carried in the initial frame and that is in the to-be-sent data.

In the foregoing solution, a quantity of channels allowed to be used by to-be-sent data is determined according to a priority, where a higher priority indicates a larger quantity of channels allowed to be used, and an initial frame corresponding to the to-be-sent data is sent by using multiple available channels simultaneously, which can effectively improve a success rate of sending data with a high priority, so that a sending delay of data with a high priority reduces relatively, thereby improving QoS of a communications system.

### BRIEF DESCRIPTION OF DRAWINGS

FIG. 1 is a schematic flowchart of a multi-channel-based data sending method according to an embodiment of the present invention;
FIG. 2 is a schematic flowchart of another multi-channel-based data sending method according to an embodiment of the present invention;
FIG. 3 is a schematic flowchart of still another multi-channel-based data sending method according to an embodiment of the present invention;
FIG. 4 is a schematic flowchart of yet another multi-channel-based data sending method according to an embodiment of the present invention;
FIG. 5 is a schematic structural diagram of a multi-channel-based data sending apparatus according to an embodiment of the present invention;
FIG. 6 is a schematic structural diagram of a station according to an embodiment of the present invention;
FIG. 7 is a schematic structural diagram of another multi-channel-based data sending apparatus according to an embodiment of the present invention;
FIG. 8 is a schematic structural diagram of still another multi-channel-based data sending apparatus according to an embodiment of the present invention;
FIG. 9 is a schematic structural diagram of yet another multi-channel-based data sending apparatus according to an embodiment of the present invention; and
FIG. 10 is a schematic structural diagram of another station according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

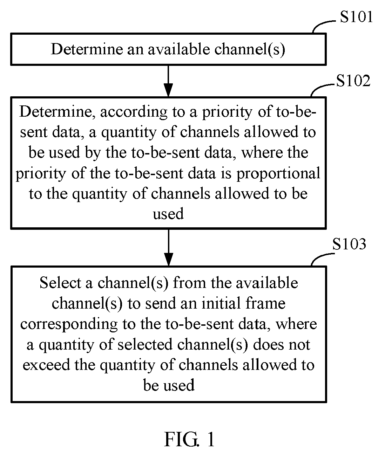

FIG. 1 is a schematic flowchart of yet another multi-channel-based data sending method according to an embodiment of the present invention. The multi-channel-based data sending method is executed by a station. As shown in FIG. 1, the multi-channel-based data sending method includes the following steps:
Step S101. Determine an available channel(s).

Optionally, in a contention mode, the station first listens for all channels, and then, determines, from all the channels, a channel(s) that is in an idle state and has completed execution of a backoffprocess as the available channel(s).

Optionally, in a contention-free mode, the station determines the available channel(s) according to an indication in a scheduling instruction sent by a scheduler. For example, station 1 is scheduled by the scheduler to perform sending on channel 1 and channel 2, and station 2 is scheduled by the scheduler to perform sending on channel 3 and channel 4, and in this case, station 1 determines channel 1 and channel 2 as available channels after receiving the scheduling instruction, and station 2 determines channel 3 and channel 4 as available channels after receiving the scheduling instruction.

Step S102. Determine, according to a priority of to-be-sent data, a quantity of channels allowed to be used by the to-be-sent data, where the priority of the to-be-sent data is proportional to the quantity of channels allowed to be used.

Specifically, the quantity of channels allowed to be used is determined according to a priority of a service type of the to-be-sent data, and service types are AC_VO, AC_VI, AC_BE, and AC BK in descending order of priority. A higher priority of a service type indicates a larger quantity of channels allowed to be used by to-be-sent data corresponding to the service type. For example, if a service type of the to-be-sent data is AC_VO, the quantity of channels allowed to be used by the to-be-sent data is 7; if a service type of the to-be-sent data is AC_VI, the quantity of channels allowed to be used by the to-be-sent data is 5; if a service type of the to-be-sent data is AC_BE, the quantity of channels allowed to be used by the to-be-sent data is 3; if a service type of the to-be-sent data is AC_BK, the quantity of channels allowed to be used by the to-be-sent data is 2. It should be noted that, the foregoing is merely used as an example of the present invention, and a specific quantity of channels allowed to be used is not specifically limited.

In addition, the priority of the to-be-sent data is determined according to a packet error rate of the to-be-sent data, where a higher packet error rate indicates a higher priority and a larger quantity of channels allowed to be used.

Step S103. Select a channel(s) from the available channel(s) to send an initial frame corresponding to the to-be-sent data, where a quantity of selected channel(s) does not exceed the quantity of channels allowed to be used.

The station determines, by sending the initial frame corresponding to the to-be-sent data, whether the to-be-sent data can be successfully sent to a receive end. If the initial frame corresponding to the to-be-sent data is successfully sent, it may be determined that the to-be-sent data can be successfully sent by using an available channel, and if the initial frame corresponding to the to-be-sent data fails to be sent, it may be determined that the to-be-sent data cannot be sent by using the available channel.

Optionally, one or more identical initial frames corresponding to the to-be-sent data are sent on the selected channel(s).

Specifically, first, a channel(s) is randomly selected from the available channel(s), where a quantity of selected channel(s) does not exceed the determined quantity of channels allowed to be used, and then, one initial frame of the to-be-sent data is sent on each channel in the selected channels, or one initial frame of the to-be-sent data is sent on multiple selected channels.

For example, the quantity of channels allowed to be used by the to-be-sent data is 4, and in this case, 4 channels are selected from the available channel(s), and then, one initial frame of the to-be-sent data is sent on each channel, or one initial frame of the to-be-sent data is sent on every two channels, and totally two initial frames of the to-be-sent data are sent, where the two initial frames are identical.

In this step, one or more identical initial frames corresponding to the to-be-sent data are sent on multiple available channels, which can achieve a diversity effect, thereby reducing a packet error rate of an initial frame.

Optionally, an initial frame corresponding to the to-be-sent data does not carry the to-be-sent data, or carries a part of the to-be-sent data, or carries all of the to-be-sent data.

When the initial frame corresponding to the to-be-sent data does not carry the to-be-sent data, after step S103, the method further includes:
if the initial frame is successfully sent, sending the to-be-sent data on the channel on which the initial frame is sent.

When the initial frame corresponding to the to-be-sent data carries a part of the to-be-sent data, after step S103, the method further includes:
if the initial frame is successfully sent, sending, on the channel on which the initial frame is sent, data that is not carried in the initial frame and that is in the to-be-sent data.

It should be noted that, in a case in which whether the initial frame is successfully sent does not need to be determined by using a response frame or an acknowledgement frame (for example, the to-be-sent data is broadcast data), after step S103, it is directly considered that the initial frame is successfully sent. In a case in which whether the initial frame is successfully sent needs to be determined by using a response frame or an acknowledgement frame, when a response frame or an acknowledgement frame sent by the receive end is received, it is determined that the to-be-sent data is successfully sent.

By using the multi-channel-based data sending method provided in this embodiment, a station determines, according to a priority, a quantity of channels allowed to be used by to-be-sent data, where a higher priority indicates a larger quantity of channels allowed to be used; then sends an initial frame corresponding to the to-be-sent data by using multiple available channels simultaneously, which can effectively improve a success rate of sending data with a high priority, so that a sending delay of data with a high priority reduces relatively, thereby improving QoS of a communications system.

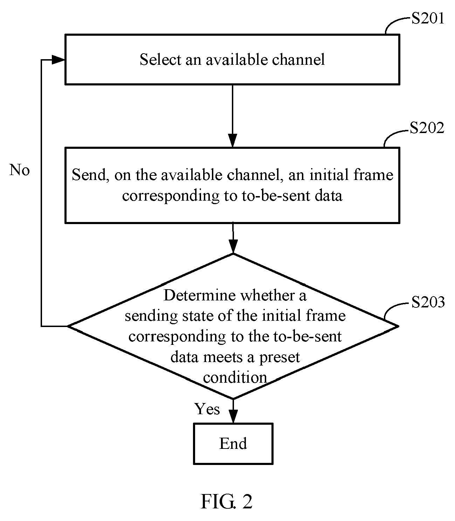

FIG. 2 is a schematic flowchart of a multi-channel-based data sending method according to an embodiment of the present invention. The multi-channel-based data sending method is executed by a station. As shown in FIG. 2, the multi-channel-based data sending method includes the following steps:
Step S201. Select an available channel.
Step S202. Send, on the available channel, an initial frame corresponding to to-be-sent data.
Step S203. Determine whether a sending state of the initial frame corresponding to the to-be-sent data meets a preset condition.

If the sending state of the initial frame corresponding to the to-be-sent data does not meet the preset condition, steps S201 to S203 are performed.

If the sending state of the initial frame corresponding to the to-be-sent data meets the preset condition, the procedure ends, and sending of the initial frame corresponding to the to-be-sent data is stopped.

By using the multi-channel-based data sending method provided in this embodiment, a station selects an available channel, and when a sending state of an initial frame corresponding to to-be-sent data on the available channel does not meet a preset condition, the station can directly reselect an available channel to perform sending and does not need to wait for a long time, and therefore, a sending delay of data is reduced, thereby improving QoS of a communications system.

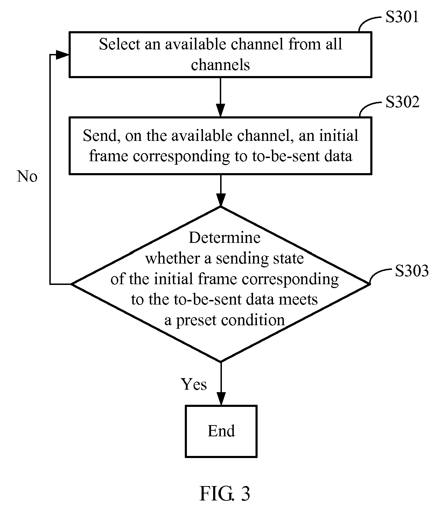

FIG. 3 is a schematic flowchart of another multi-channel-based data sending method according to an embodiment of the present invention. The multi-channel-based data sending method is executed by a station. As shown in FIG. 3, the multi-channel-based data sending method includes the following steps:
Step S301. Select an available channel from all channels.

Optionally, the station selects the available channel from all the channels according to a situation of all the channels that have been listened for. Specifically, in a contention mode, the station first listens for all the channels, and selects, from all the channels, an idle channel that has completed execution of a backoff process as the available channel.

Optionally, the station selects the available channel from all the channels according to a channel scheduling situation. Specifically, in a contention-free mode, the station selects the available channel according to an indication in a scheduling instruction sent by a scheduler. For example, station 1 is scheduled by the scheduler to perform sending on channel 1 and channel 2, and station 2 is scheduled by the scheduler to perform sending on channel 3 and channel 4, and in this case, station 1 randomly selects a channel from channel 1 and channel 2 as the available channel after receiving the scheduling instruction, and station 2 randomly selects a channel from channel 3 and channel 4 as the available channel after receiving the scheduling instruction.

Step S302. Send, on the available channel, an initial frame corresponding to to-be-sent data.

The station determines, by sending the initial frame corresponding to the to-be-sent data, whether the to-be-sent data can be successfully sent to a receive end. If the initial frame corresponding to the to-be-sent data is successfully sent, it may be determined that the to-be-sent data can be successfully sent by using an available channel, and if the initial frame corresponding to the to-be-sent data fails to be sent, it may be determined that the to-be-sent data cannot be sent by using the available channel.

Step S303. Determine whether a sending state of the initial frame corresponding to the to-be-sent data meets a preset condition.

Specifically, the preset condition includes that:
the initial frame corresponding to the to-be-sent data is successfully sent.

It should be noted that, in a case in which whether the initial frame is successfully sent does not need to be determined by using a response frame or an acknowledgement frame (for example, the to-be-sent data is broadcast data), after step 302, it is directly considered that the initial frame is successfully sent. In a case in which whether the initial frame is successfully sent needs to be determined by using a response frame or an acknowledgement frame, when a response frame or an acknowledgement frame sent by the receive end is received, it is determined that the to-be-sent data is successfully sent. After it is determined that the initial frame corresponding to the to-be-sent data is successfully sent, sending of the initial frame corresponding to the to-be-sent data is stopped.

Preferably, if the initial frame corresponding to the to-be-sent data fails to be sent all the time, and if there are no other conditions to perform limitation, steps S301 to S303 are repeated endlessly all the time, and therefore, the preset condition may further include at least one of the following conditions:
a quantity of sending times of the initial frame corresponding to the to-be-sent data reaches a preset quantity of sending times; and
a time during which the initial frame corresponding to the to-be-sent data occupies the available channel exceeds a preset time threshold.

That a quantity of sending times of the initial frame corresponding to the to-be-sent data reaches a preset quantity of sending times indicates that the initial frame corresponding to the to-be-sent data has already been sent for many times, and a reason why the initial frame corresponding to the to-be-sent data fails to be sent may be unrelated to the channel, and therefore, the initial frame corresponding to the to-be-sent data cannot be sent endlessly, and an upper limit of a quantity of sending times needs to be set. When the quantity of sending times of the initial frame corresponding to the to-be-sent data reaches the upper limit of the quantity of sending times, the initial frame corresponding to the to-be-sent data is not sent any longer.

Preferably, before the determining whether a sending state of the initial frame corresponding to the to-be-sent data meets a preset condition, the method further includes: setting the quantity of sending times according to a priority of the to-be-sent data, where the priority of the to-be-sent data is proportional to the quantity of sending times, that is, a higher priority of the to-be-sent data correspondingly indicates a larger preset quantity of sending times of the to-be-sent data. For example, the priority of the to-be-sent data is determined according to a service type of the to-be-sent data; if a service type of the to-be-sent data is AC_VO, correspondingly, the preset quantity of sending times of the to-be-sent data is 7 times; if a service type of the to-be-sent data is AC_VI, correspondingly, the preset quantity of sending times of the to-be-sent data is 5 times; if a service type of the to-be-sent data is AC_BE, correspondingly, the preset quantity of sending times of the to-be-sent data is 3 times; if a service type of the to-be-sent data is AC_BK, correspondingly, the preset quantity of sending times of the to-be-sent data is 2 times. It should be noted that, the foregoing is merely used as an example of the present invention, and a specific preset quantity of sending times is not specifically limited. For another example, the priority of the to-be-sent data is determined according to a packet error rate of the to-be-sent data, where a higher packet error rate indicates a higher priority and a larger preset quantity of sending times.

That a time during which the initial frame corresponding to the to-be-sent data occupies the available channel exceeds a preset time threshold indicates that the initial frame corresponding to the to-be-sent data has already occupied an available channel for a long time, and all other channels may be in an unavailable state, that is, another available channel cannot be selected to perform sending of the initial frame corresponding to the to-be-sent data again, which may also cause a delay. In addition, if the to-be-sent data is a real-time service, the data may be invalid after a particular time expires, so the to-be-sent data cannot keep waiting all the time. Therefore, an upper limit of a time threshold is set, and when the time during which the initial frame corresponding to the to-be-sent data occupies an available channel exceeds the upper limit of the time threshold, sending of the initial frame corresponding to the to-be-sent data is stopped.

If the sending state of the initial frame corresponding to the to-be-sent data meets at least one condition included in the preset condition, the procedure ends, and sending of the initial frame corresponding to the to-be-sent data is stopped.

If the sending state of the initial frame corresponding to the to-be-sent data does not meet all conditions included in the preset condition, steps S301 to S303 are performed again until the sending state of the initial frame corresponding to the to-be-sent data meets at least one condition included in the preset condition.

It should be noted that, the preset condition may further include another condition, and the foregoing three conditions are used as an example for description in Embodiment 3 of the present invention, which is not limited in the present invention.

Optionally, the initial frame corresponding to the to-be-sent data does not carry the to-be-sent data, or carries a part of the to-be-sent data, or carries all of the to-be-sent data.

When the initial frame corresponding to the to-be-sent data does not carry the to-be-sent data, after step S303, the method further includes:
if the initial frame is successfully sent, sending the to-be-sent data on the channel on which the initial frame is sent.

When the initial frame corresponding to the to-be-sent data carries a part of the to-be-sent data, after step S303, the method further includes:
if the initial frame is successfully sent, sending, on the channel on which the initial frame is sent, data that is not carried in the initial frame and that is in the to-be-sent data.

By using the multi-channel-based data sending method provided in this embodiment, a station selects an available channel, and when an initial frame corresponding to to-be-sent data fails to be sent on the available channel, the station can directly reselect an available channel to perform sending again and does not need to wait for a long time, and therefore, a sending delay of data is reduced, thereby improving QoS of a communications system.

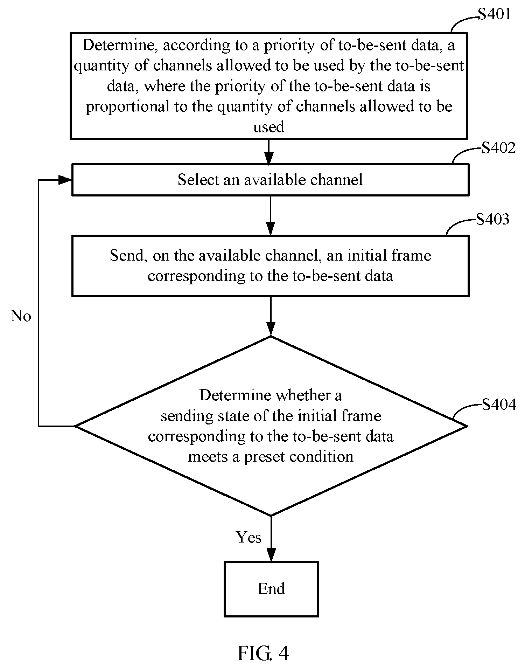

FIG. 4 is a schematic flowchart of still another multi-channel-based data sending method according to an embodiment of the present invention. The multi-channel-based data sending method is executed by a station. As shown in FIG. 4, the multi-channel-based data sending method includes the following steps:
Step S401. Determine, according to a priority of to-be-sent data, a quantity of channels allowed to be used by the to-be-sent data, where the priority of the to-be-sent data is proportional to the quantity of channels allowed to be used.

Optionally, the quantity of channels allowed to be used is determined according to a priority of a service type of the to-be-sent data, and service types are AC_VO, AC_VI, AC_BE, and AC BK in descending order of priority. A higher priority of a service type indicates a larger quantity of channels allowed to be used by to-be-sent data corresponding to the service type. For example, if a service type of the to-be-sent data is AC_VO, the quantity of channels allowed to be used by the to-be-sent data is 7; if a service type of the to-be-sent data is AC_VI, the quantity of channels allowed to be used by the to-be-sent data is 5; if a service type of the to-be-sent data is AC_BE, the quantity of channels allowed to be used by the to-be-sent data is 3; if a service type of the to-be-sent data is AC_BK, the quantity of channels allowed to be used by the to-be-sent data is 2. It should be noted that, the foregoing is merely used as an example of the present invention, and a specific quantity of channels allowed to be used is not specifically limited.

Optionally, the priority of the to-be-sent data is determined according to a packet error rate of the to-be-sent data, where a higher packet error rate indicates a higher priority and a larger quantity of channels allowed to be used.

Step S402. Select an available channel.

Optionally, in a contention mode, the station randomly selects, from all channels, channels whose quantity does not exceed the quantity of channels allowed to be used, and then, listens for the selected channels, and selects, from the selected channels, an idle channel that has completed execution of a backoff process as the available channel.

For example, a determined quantity of channels allowed to be used by to-be-forwarded data is 5, and in this case, the station randomly selects at most 5 channels from all the channels, and then, listens for the at most 5 channels, and selects, from the at most 5 channels, an idle channel that has completed execution of a backoff process as the available channel.

Optionally, in a contention-free mode, the station sends a scheduling request to a scheduler, where the scheduling request carries the quantity of channels allowed to be used, and the scheduler performs scheduling on the station according to the quantity, corresponding to to-be-sent data of the station, of channels allowed to be used. The station selects an available channel according to an indication in a scheduling instruction sent by the scheduler, and a quantity of channels indicated by the channel scheduling instruction does not exceed the quantity of channels allowed to be used.

For example, station 1 and station 2 separately sends a scheduling request to the scheduler, it can be learned from the scheduling request that quantities, corresponding to to-be-sent data of site 1 and to-be-sent data of site 2, of channels allowed to be used are respectively 3 and 2 channels; in this case, station 1 may be scheduled by the scheduler to perform sending on channel 1 and/or channel 2 and/or channel 3, and station 2 may be scheduled by the scheduler to perform sending on channel 4 and/or channel 5; station 1 selects channel 1 and/or channel 2 and/or channel 3 from all channels after receiving the scheduling instruction, and randomly selects a channel from channel 1 and/or channel 2 and/or channel 3 as the available channel; station 2 selects channel 4 and/or channel 5 from all channels after receiving the scheduling instruction, and randomly selects a channel from channel 4 and/or channel 5 as the available channel.

Step S403. Send, on the available channel, an initial frame corresponding to the to-be-sent data.

The station determines, by sending the initial frame corresponding to the to-be-sent data, whether the to-be-sent data can be successfully sent to a receive end. If the initial frame corresponding to the to-be-sent data is successfully sent, it may be determined that the to-be-sent data can be successfully sent by using an available channel, and if the initial frame corresponding to the to-be-sent data fails to be sent, it may be determined that the to-be-sent data cannot be sent by using the available channel.

Step S404. Determine whether a sending state of the initial frame corresponding to the to-be-sent data meets a preset condition.

Specifically, the preset condition includes that:
the initial frame corresponding to the to-be-sent data is successfully sent.

It should be noted that, in a case in which whether the initial frame is successfully sent does not need to be determined by using a response frame or an acknowledgement frame (for example, the to-be-sent data is broadcast data), after step S403, it is directly considered that the initial frame is successfully sent. In a case in which whether the initial frame is successfully sent needs to be determined by using a response frame or an acknowledgement frame, when a response frame or an acknowledgement frame sent by the receive end is received, it is determined that the to-be-sent data is successfully sent. After it is determined that the initial frame corresponding to the to-be-sent data is successfully sent, sending of the initial frame corresponding to the to-be-sent data is stopped.

Preferably, if the initial frame corresponding to the to-be-sent data fails to be sent all the time, and if there are no other conditions to perform limitation, steps S402 to S404 are repeated endlessly all the time, and therefore, the preset condition may further include at least one of the following conditions:
a quantity of sending times of the initial frame corresponding to the to-be-sent data reaches a preset quantity of sending times; and
a time during which the initial frame corresponding to the to-be-sent data occupies the available channel exceeds a preset time threshold.

That a quantity of sending times of the initial frame corresponding to the to-be-sent data reaches a preset quantity of sending times indicates that the initial frame corresponding to the to-be-sent data has already been sent for many times, and a reason why the initial frame corresponding to the to-be-sent data fails to be sent may be unrelated to the channel, and therefore, the initial frame corresponding to the to-be-sent data cannot be sent endlessly, and an upper limit of a quantity of sending times needs to be set. When the quantity of sending times of the initial frame corresponding to the to-be-sent data reaches the upper limit of the quantity of sending times, the initial frame corresponding to the to-be-sent data is not sent any longer.

Preferably, before the determining whether a sending state of the initial frame corresponding to the to-be-sent data meets a preset condition, the method further includes setting the quantity of sending times to the quantity of channels allowed to be used.

That a time during which the initial frame corresponding to the to-be-sent data occupies the available channel exceeds a preset time threshold indicates that the initial frame corresponding to the to-be-sent data has already occupied an available channel for a long time, and all other channels may be in an unavailable state, that is, another available channel cannot be selected to perform sending of the initial frame corresponding to the to-be-sent data again, which may also cause a delay. In addition, if the to-be-sent data is a real-time service, the data may be invalid after a particular time expires, so the to-be-sent data cannot keep waiting all the time. Therefore, an upper limit of a time threshold is set, and when the time during which the initial frame corresponding to the to-be-sent data occupies an available channel exceeds the upper limit of the time threshold, sending of the initial frame corresponding to the to-be-sent data is stopped.

If the sending state of the initial frame corresponding to the to-be-sent data meets at least one condition included in the preset condition, the procedure ends, and sending of the initial frame corresponding to the to-be-sent data is stopped.

If the sending state of the initial frame corresponding to the to-be-sent data does not meet all conditions included in the preset condition, steps S402 to S404 are performed again until the sending state of the initial frame corresponding to the to-be-sent data meets at least one condition included in the preset condition.

It should be noted that, the preset condition may further include another condition, and the foregoing three conditions are used as an example for description in Embodiment 3 of the present invention, which is not limited in the present invention.

Optionally, the initial frame corresponding to the to-be-sent data does not carry the to-be-sent data, or carries a part of the to-be-sent data, or carries all of the to-be-sent data.

When the initial frame corresponding to the to-be-sent data does not carry the to-be-sent data, after step S404, the method further includes:
if the initial frame is successfully sent, sending the to-be-sent data on the channel on which the initial frame is sent.

When the initial frame corresponding to the to-be-sent data carries a part of the to-be-sent data, after step S404, the method further includes:
if the initial frame is successfully sent, sending, on the channel on which the initial frame is sent, data that is not carried in the initial frame and that is in the to-be-sent data.

By using the multi-channel-based data sending method provided in this embodiment, when selecting an available channel, a station only needs to listen for some channels instead of all channels, which can save resources effectively. In addition, when an initial frame corresponding to to-be-sent data fails to be sent on an available channel, the station can directly reselect an available channel to perform sending and does not need to wait for a long time, and therefore, a sending delay of data is reduced, thereby improving QoS of a communications system.

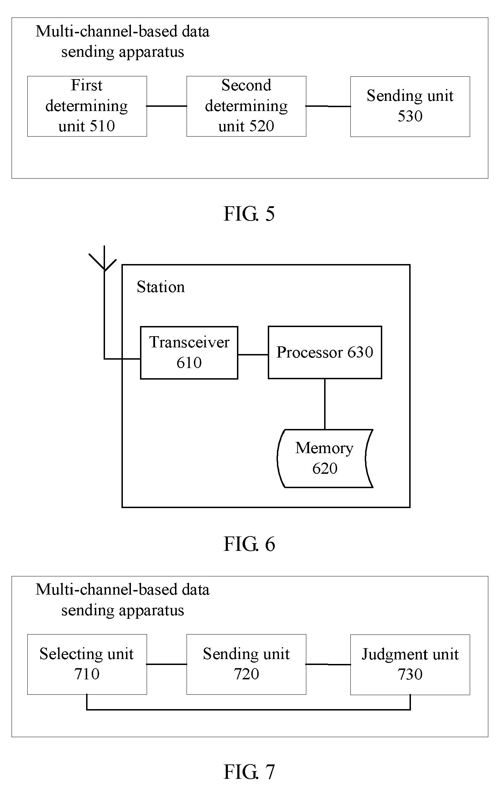

FIG. 5 is a schematic structural diagram of yet another multi-channel-based data sending apparatus according to an embodiment of the present invention. The multi-channel-based data sending apparatus is configured to implement the multi-channel-based data sending method shown in FIG. 4. As shown in FIG. 5, the multi-channel-based data sending apparatus includes a first determining unit 510, a second determining unit 520, and a sending unit 530.

The first determining unit 510 is configured to determine an available channel(s).

Optionally, in a contention mode, the first determining unit 510 first listens for all channels, and determines, from all the channels, a channel(s) that is in an idle state and has completed execution of a backoff process as the available channel(s).

Optionally, in a contention-free mode, the first determining unit 510 determines the available channel according to an indication in a scheduling instruction sent by a scheduler. For example, station 1 is scheduled by the scheduler to perform sending on channel 1 and channel 2, and station 2 is scheduled by the scheduler to perform sending on channel 3 and channel 4, and in this case, a first determining unit 510 of station 1 determines channel 1 and channel 2 as available channels after receiving the scheduling instruction, and a first determining unit 510 of station 2 determines channel 3 and channel 4 as available channels after receiving the scheduling instruction.

The second determining unit 520 is configured to determine, according to a priority of to-be-sent data, a quantity of channels allowed to be used by the to-be-sent data, where the priority of the to-be-sent data is proportional to the quantity of channels allowed to be used.

Specifically, the second determining unit 520 determines, according to a priority of a service type of the to-be-sent data, the quantity of channels allowed to be used, where a higher priority of a service type indicates a larger quantity of channels allowed to be used by to-be-sent data corresponding to the service type.

In addition, the second determining unit 520 may further determine the priority of the to-be-sent data according to a packet error rate of the to-be-sent data, where a higher packet error rate indicates a higher priority and a larger quantity of channels allowed to be used.

The sending unit 530 is configured to select a channel(s) from the available channel(s) to send an initial frame corresponding to the to-be-sent data, where a quantity of selected channel(s) does not exceed the quantity of channels allowed to be used.

Whether the to-be-sent data can be successfully sent to a receive end is determined by sending the initial frame corresponding to the to-be-sent data. If the initial frame corresponding to the to-be-sent data is successfully sent, it may be determined that the to-be-sent data can be successfully sent by using an available channel, and if the initial frame corresponding to the to-be-sent data fails to be sent, it may be determined that the to-be-sent data cannot be sent by using the available channel.

Optionally, the sending unit 530 sends, on the selected channel(s), one or more identical initial frames corresponding to the to-be-sent data.

Specifically, the sending unit 530 first randomly selects a channel(s) from the available channel(s), where a quantity of selected channel(s) does not exceed the determined quantity of channels allowed to be used, and then, sends one initial frame of the to-be-sent data on each channel in the selected channels, or sends one initial frame of the to-be-sent data on multiple selected channels.

For example, the quantity of channels allowed to be used by the to-be-sent data is 4, and in this case, 4 channels are selected from the available channels, and then, one initial frame of the to-be-sent data is sent on each channel, or one initial frame of the to-be-sent data is sent on every two channels, and totally two initial frames of the to-be-sent data are sent, where the two initial frames are identical.

By using such a sending manner of sending, on multiple available channels, one or more identical initial frames corresponding to the to-be-sent data, a diversity effect can be achieved, thereby reducing a packet error rate of the initial frame.

Optionally, an initial frame corresponding to the to-be-sent data does not carry the to-be-sent data, or carries a part of the to-be-sent data, or carries all of the to-be-sent data.

The sending unit 530 is further configured to: when the initial frame corresponding to the to-be-sent data does not carry the to-be-sent data and if the initial frame is successfully sent, send the to-be-sent data on the channel on which the initial frame is sent.

The sending unit 530 is further configured to: when the initial frame corresponding to the to-be-sent data carries a part of the to-be-sent data and if the initial frame is successfully sent, send, on the channel on which the initial frame is sent, data that is not carried in the initial frame and that is in the to-be-sent data.

It should be noted that, in a case in which whether the initial frame is successfully sent does not need to be determined by using a response frame or an acknowledgement frame (for example, the to-be-sent data is broadcast data), after the sending unit 530 sends the initial frame, it is directly considered that the initial frame is successfully sent. In a case in which whether the initial frame is successfully sent needs to be determined by using a response frame or an acknowledgement frame, when the apparatus receives a response frame or an acknowledgement frame sent by the receive end, it is determined that the to-be-sent data is successfully sent.

By using the multi-channel-based data sending apparatus provided in this embodiment, the apparatus determines, according to a priority, a quantity of channels allowed to be used by to-be-sent data, where a higher priority indicates a larger quantity of channels allowed to be used; then, sends an initial frame corresponding to the to-be-sent data by using multiple available channels simultaneously, which can effectively improve a success rate of sending data with a high priority, so that a sending delay of data with a high priority reduces relatively, thereby improving QoS of a communications system.

FIG. 6 is a schematic structural diagram of another station according to an embodiment of the present invention. The station is configured to implement the multi-channel-based data sending method shown in FIG. 1. As shown in FIG. 6, the station includes a transceiver 610, a memory 620, and a processor 630 that is connected to the transceiver 610 and the memory 620 separately. Certainly, the station may further include general components, such as an antenna, a baseband processing component, an intermediate/radio frequency processing component, and an input/output apparatus. This embodiment of the present invention sets no limitation thereto.

The memory 620 stores a group of program code, and the processor 630 is configured to invoke the program code stored in the memory 620 so as to perform the following operations:
determining an available channel(s);
determining, according to a priority of to-be-sent data, a quantity of channels allowed to be used by the to-be-sent data, where the priority of the to-be-sent data is proportional to the quantity of channels allowed to be used; and
selecting a channel(s) from the available channel(s) to send an initial frame corresponding to the to-be-sent data, where a quantity of channels does not exceed the quantity of channels allowed to be used.

Further, the determining an available channel is specifically:
listening for all channels, and determining a currently-idle channel(s) that has completed execution of a backoff process as the available channel(s); or receiving a channel scheduling instruction sent by a scheduler, and determining a channel(s) indicated by the channel scheduling instruction as the available channel(s).

Further, the selecting a channel(s) from the available channel(s) to send an initial frame corresponding to the to-be-sent data is specifically:
sending, on the selected channel(s), one or more identical initial frames corresponding to the to-be-sent data.

Further, an initial frame does not carry the to-be-sent data, or carries a part of the to-be-sent data, or carries all of the to-be-sent data.

When the initial frame does not carry the to-be-sent data, after the selecting a channel from the available channel to send an initial frame corresponding to the to-be-sent data, the processor 630 invokes the program code stored in the memory 620 so as further to perform the following operation:
if the initial frame is successfully sent, sending the to-be-sent data on the channel on which the initial frame is sent.

When the initial frame carries a part of the to-be-sent data, after the selecting a channel from the available channel to send an initial frame corresponding to the to-be-sent data, the processor 630 invokes the program code stored in the memory 620 so as further to perform the following operation:
if the initial frame is successfully sent, sending, on the channel on which the initial frame is sent, data that is not carried in the initial frame and that is in the to-be-sent data.

By using the station provided in this embodiment, the station determines, according to a priority, a quantity of channels allowed to be used by to-be-sent data, where a higher priority indicates a larger quantity of channels allowed to be used; then, sends an initial frame corresponding to the to-be-sent data by using multiple available channels simultaneously, which can effectively improve a success rate of sending data with a high priority, so that a sending delay of data with a high priority reduces relatively, thereby improving QoS of a communications system.

FIG. 7 is a schematic structural diagram of a multi-channel-based data sending apparatus according to an embodiment of the present invention. The multi-channel-based data sending apparatus is configured to implement the multi-channel-based data sending method shown in FIG. 2. As shown in FIG. 7, the multi-channel-based data sending apparatus includes a selecting unit 710, a sending unit 720, and a judgment unit 730.

The sending unit 710 is configured to select an available channel.

The sending unit 720 is configured to send, on the available channel, an initial frame corresponding to to-be-sent data.

The judgment unit 730 is configured to determine whether a sending state of the initial frame corresponding to the to-be-sent data meets a preset condition.

If the sending state of the initial frame corresponding to the to-be-sent data does not meet the preset condition, the selecting unit 710 reselects an available channel, and the sending unit 720 sends the initial frame corresponding to the to-be-sent data on the reselected available channel.

If the sending state of the initial frame corresponding to the to-be-sent data meets the preset condition, sending of the initial frame corresponding to the to-be-sent data is stopped.

By using the multi-channel-based data sending apparatus provided in this embodiment, the apparatus selects an available channel, and when a sending state of an initial frame corresponding to to-be-sent data on the available channel does not meet a preset condition, the apparatus can directly reselect an available channel to perform sending and does not need to wait for a long time, and therefore, a sending delay of data is reduced, thereby improving QoS of a communications system.

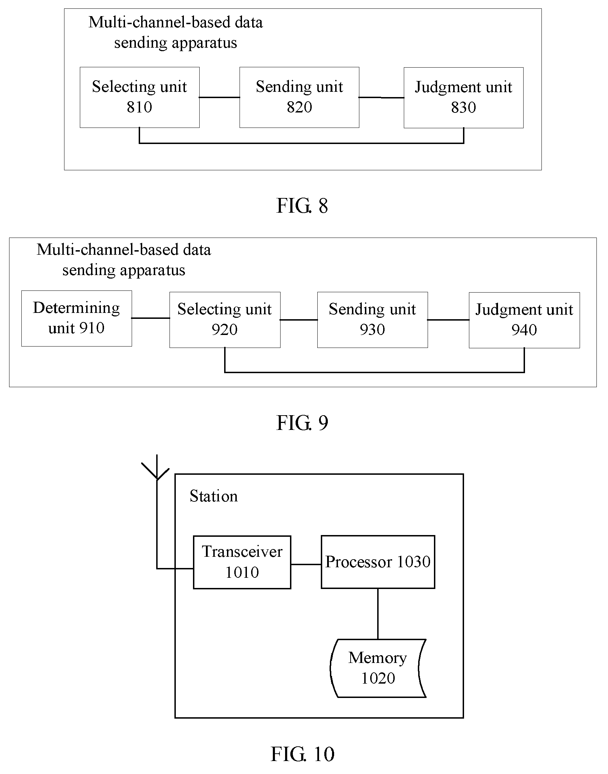

FIG. 8 is a schematic structural diagram of another multi-channel-based data sending apparatus according to an embodiment of the present invention. The multi-channel-based data sending apparatus is configured to implement the multi-channel-based data sending method shown in FIG. 3. As shown in FIG. 8, the multi-channel-based data sending apparatus includes a selecting unit 810, a sending unit 820, and a judgment unit 830.

The selecting unit 810 is configured to select an available channel from all channels.

Optionally, the selecting unit 810 selects the available channel from all the channels according to a situation of all the channels that have been listened for. Specifically, in a contention mode, the selecting unit 810 first listens for all the channels, and selects, from all the channels, an idle channel that has completed execution of a backoff process as the available channel.

Optionally, the selecting unit 810 selects the available channel from all the channels according to a channel scheduling situation. Specifically, in a contention-free mode, the selecting unit 810 selects the available channel according to an indication in a scheduling instruction sent by a scheduler. For example, station 1 is scheduled by the scheduler to perform sending on channel 1 and channel 2, and station 2 is scheduled by the scheduler to perform sending on channel 3 and channel 4, and in this case, a selecting unit 810 of station 1 randomly selects a channel from channel 1 and channel 2 as the available channel after receiving the scheduling instruction, and station 2 randomly selects a channel from channel 3 and channel 4 as the available channel after receiving the scheduling instruction.

The sending unit 820 is configured to send, on the available channel, an initial frame corresponding to to-be-sent data.

Whether the to-be-sent data can be successfully sent to a receive end is determined by sending the initial frame corresponding to the to-be-sent data. If the initial frame corresponding to the to-be-sent data is successfully sent, it may be determined that the to-be-sent data can be successfully sent by using an available channel, and if the initial frame corresponding to the to-be-sent data fails to be sent, it may be determined that the to-be-sent data cannot be sent by using the available channel.

The judgment unit 830 is configured to determine whether a sending state of the initial frame corresponding to the to-be-sent data meets a preset condition.

Specifically, the preset condition includes that:
the initial frame corresponding to the to-be-sent data is successfully sent.

It should be noted that, in a case in which whether the initial frame is successfully sent does not need to be determined by using a response frame or an acknowledgement frame (for example, the to-be-sent data is broadcast data), after the sending unit 820 sends the initial frame, it is directly considered that the initial frame is successfully sent. In a case in which whether the initial frame is successfully sent needs to be determined by using a response frame or an acknowledgement frame, when a response frame or an acknowledgement frame sent by the receive end is received, it is determined that the to-be-sent data is successfully sent. After it is determined that the initial frame corresponding to the to-be-sent data is successfully sent, sending of the initial frame corresponding to the to-be-sent data is stopped.

Preferably, if the initial frame corresponding to the to-be-sent data fails to be sent all the time, and if there are no other conditions to perform limitation, the initial frame is sent endlessly all the time, and therefore, the preset condition may further include at least one of the following conditions:
a quantity of sending times of the initial frame corresponding to the to-be-sent data reaches a preset quantity of sending times; and
a time during which the initial frame corresponding to the to-be-sent data occupies the available channel exceeds a preset time threshold.

That a quantity of sending times of the initial frame corresponding to the to-be-sent data reaches a preset quantity of sending times indicates that the initial frame corresponding to the to-be-sent data has already been sent for many times, and a reason why the initial frame corresponding to the to-be-sent data fails to be sent may be unrelated to the channel, and therefore, the initial frame corresponding to the to-be-sent data cannot be sent endlessly, and an upper limit of a quantity of sending times needs to be set. When the quantity of sending times of the initial frame corresponding to the to-be-sent data reaches the upper limit of the quantity of sending times, the initial frame corresponding to the to-be-sent data is not sent any longer.

Preferably, the apparatus further includes a setting unit, which is configured to: before determining whether the sending state of the initial frame corresponding to the to-be-sent data meets the preset condition, the method further includes: setting the quantity of sending times according to a priority of the to-be-sent data, where the priority of the to-be-sent data is proportional to the quantity of sending times, that is, a higher priority of the to-be-sent data correspondingly indicates a larger preset quantity of sending times of the to-be-sent data. For example, the priority of the to-be-sent data is determined according to a service type of the to-be-sent data. For another example, the priority of the to-be-sent data is determined according to a packet error rate of the to-be-sent data, where a higher packet error rate indicates a higher priority and a larger preset quantity of sending times.

That a time during which the initial frame corresponding to the to-be-sent data occupies the available channel exceeds a preset time threshold indicates that the initial frame corresponding to the to-be-sent data has already occupied an available channel for a long time, and all other channels may be in an unavailable state, that is, another available channel cannot be selected to perform sending of the initial frame corresponding to the to-be-sent data again, which may also cause a delay. In addition, if the to-be-sent data is a real-time service, the data may be invalid after a particular time expires, so the to-be-sent data cannot keep waiting all the time. Therefore, an upper limit of a time threshold is set, and when the time during which the initial frame corresponding to the to-be-sent data occupies an available channel exceeds the upper limit of the time threshold, sending of the initial frame corresponding to the to-be-sent data is stopped.

If the sending state of the initial frame corresponding to the to-be-sent data meets at least one condition included in the preset condition, the procedure ends, and sending of the initial frame corresponding to the to-be-sent data is stopped.

If the sending state of the initial frame corresponding to the to-be-sent data does not meet all conditions included in the preset condition, the selecting unit 810 selects an available channel from all the channels again, the sending unit 820 sends the initial frame corresponding to the to-be-sent data on the reselected available channel, and the judgment unit 830 determines again whether the sending state of the initial frame corresponding to the to-be-sent data meets the preset condition, until the sending state of the initial frame corresponding to the to-be-sent data meets at least one condition included in the preset condition.

It should be noted that, the preset condition may further include another condition, and the foregoing three conditions are used as an example for description in Embodiment 3 of the present invention, which is not limited in the present invention.

Optionally, the initial frame corresponding to the to-be-sent data does not carry the to-be-sent data, or carries a part of the to-be-sent data, or carries all of the to-be-sent data.

The sending unit 820 is further configured to: when the initial frame corresponding to the to-be-sent data does not carry the to-be-sent data and if the initial frame is successfully sent, send the to-be-sent data on the channel on which the initial frame is sent.

The sending unit 820 is further configured to: when the initial frame corresponding to the to-be-sent data carries a part of the to-be-sent data and if the initial frame is successfully sent, send, on the channel on which the initial frame is sent, data that is not carried in the initial frame and that is in the to-be-sent data.

By using the multi-channel-based data sending apparatus provided in this embodiment, the apparatus selects an available channel, and when an initial frame corresponding to to-be-sent data fails to be sent on the available channel, the apparatus can directly reselect an available channel to perform sending and does not need to wait for a long time, and therefore, a sending delay of data is reduced, thereby improving QoS of a communications system.

FIG. 9 is a schematic structural diagram of still another multi-channel-based data sending apparatus according to an embodiment of the present invention. The multi-channel-based data sending apparatus is configured to implement the multi-channel-based data sending method shown in FIG. 4. As shown in FIG. 9, the multi-channel-based data sending apparatus includes a determining unit 910, a selecting unit 920, a sending unit 930, and a judgment unit 940.

The determining unit 910 is configured to determine, according to a priority of to-be-sent data, a quantity of channels allowed to be used by the to-be-sent data, where the priority of the to-be-sent data is proportional to the quantity of channels allowed to be used.

Optionally, the determining unit 910 determines, according to a priority of a service type of the to-be-sent data, the quantity of channels allowed to be used, where a higher priority of a service type indicates a larger quantity of channels allowed to be used by to-be-sent data corresponding to the service type.

Optionally, the determining unit 910 determines the priority of the to-be-sent data according to a packet error rate of the to-be-sent data, where a higher packet error rate indicates a higher priority and a larger quantity of channels allowed to be used.

The selecting unit 920 is configured to select an available channel.

Optionally, in a contention mode, the selecting unit 920 randomly selects, from all channels, channels whose quantity does not exceed the quantity of channels allowed to be used, and then, listens for the selected channels, and selects, from the selected channels, an idle channel that has completed execution of a backoffprocess as the available channel.

Optionally, in a contention-free mode, the selecting unit 920 sends a scheduling request to a scheduler, where the scheduling request carries the quantity of channels allowed to be used, and the scheduler performs scheduling on the station according to the quantity, corresponding to to-be-sent data of the station, of channels allowed to be used. The selecting unit 920 selects an available channel according to an indication in a scheduling instruction sent by the scheduler, and a quantity of channels indicated by the channel scheduling instruction does not exceed the quantity of channels allowed to be used.

The sending unit 930 is configured to send, on the available channel, an initial frame corresponding to the to-be-sent data.

Whether the to-be-sent data can be successfully sent to a receive end is determined by sending the initial frame corresponding to the to-be-sent data. If the initial frame corresponding to the to-be-sent data is successfully sent, it may be determined that the to-be-sent data can be successfully sent by using an available channel, and if the initial frame corresponding to the to-be-sent data fails to be sent, it may be determined that the to-be-sent data cannot be sent by using the available channel.

The judgment unit 940 is configured to determine whether a sending state of the initial frame corresponding to the to-be-sent data meets a preset condition.

Specifically, the preset condition includes that:
the initial frame corresponding to the to-be-sent data is successfully sent.

It should be noted that, in a case in which whether the initial frame is successfully sent does not need to be determined by using a response frame or an acknowledgement frame (for example, the to-be-sent data is broadcast data), after the sending unit 930 sends the initial frame, it is directly considered that the initial frame is successfully sent. In a case in which whether the initial frame is successfully sent needs to be determined by using a response frame or an acknowledgement frame, when a response frame or an acknowledgement frame sent by the receive end is received, it is determined that the to-be-sent data is successfully sent. After it is determined that the initial frame corresponding to the to-be-sent data is successfully sent, sending of the initial frame corresponding to the to-be-sent data is stopped.

Preferably, if the initial frame corresponding to the to-be-sent data fails to be sent all the time, and if there are no other conditions to perform limitation, the initial frame is sent endlessly all the time, and therefore, the preset condition may further include at least one of the following conditions:
a quantity of sending times of the initial frame corresponding to the to-be-sent data reaches a preset quantity of sending times; and
a time during which the initial frame corresponding to the to-be-sent data occupies the available channel exceeds a preset time threshold.

That a quantity of sending times of the initial frame corresponding to the to-be-sent data reaches a preset quantity of sending times indicates that the initial frame corresponding to the to-be-sent data has already been sent for many times, and a reason why the initial frame corresponding to the to-be-sent data fails to be sent may be unrelated to the channel, and therefore, the initial frame corresponding to the to-be-sent data cannot be sent endlessly, and an upper limit of a quantity of sending times needs to be set. When the quantity of sending times of the initial frame corresponding to the to-be-sent data reaches the upper limit of the quantity of sending times, the initial frame corresponding to the to-be-sent data is not sent any longer.

Preferably, the apparatus further includes a setting unit that is configured to set the quantity of sending times to the quantity of channels allowed to be used.

That a time during which the initial frame corresponding to the to-be-sent data occupies the available channel exceeds a preset time threshold indicates that the initial frame corresponding to the to-be-sent data has already occupied an available channel for a long time, and all other channels may be in an unavailable state, that is, another available channel cannot be selected to perform sending of the initial frame corresponding to the to-be-sent data again, which may also cause a delay. In addition, if the to-be-sent data is a real-time service, the data may be invalid after a particular time expires, so the to-be-sent data cannot keep waiting all the time. Therefore, an upper limit of a time threshold is set, and when the time during which the initial frame corresponding to the to-be-sent data occupies an available channel exceeds the upper limit of the time threshold, sending of the initial frame corresponding to the to-be-sent data is stopped.

If the sending state of the initial frame corresponding to the to-be-sent data meets at least one condition included in the preset condition, the procedure ends, and sending of the initial frame corresponding to the to-be-sent data is stopped.

If the sending state of the initial frame corresponding to the to-be-sent data does not meet all conditions included in the preset condition, the selecting unit 920 selects again an available channel from selected channels whose quantity is the same as the quantity of channels allowed to be used, the sending unit 930 sends the initial frame corresponding to the to-be-sent data on the reselected available channel, and the judgment unit 940 determines again whether the sending state of the initial frame corresponding to the to-be-sent data meets the preset condition, until the sending state of the initial frame corresponding to the to-be-sent data meets at least one condition included in the preset condition.

It should be noted that, the preset condition may further include another condition, and the foregoing three conditions are used as an example for description in Embodiment 3 of the present invention, which is not limited in the present invention.

Optionally, the initial frame corresponding to the to-be-sent data does not carry the to-be-sent data, or carries a part of the to-be-sent data, or carries all of the to-be-sent data.

The sending unit 930 is further configured to: when the initial frame corresponding to the to-be-sent data does not carry the to-be-sent data and if the initial frame is successfully sent, send the to-be-sent data on the channel on which the initial frame is sent.

The sending unit 930 is further configured to: when the initial frame corresponding to the to-be-sent data carries a part of the to-be-sent data and if the initial frame is successfully sent, send, on the channel on which the initial frame is sent, data that is not carried in the initial frame and that is in the to-be-sent data.

By using the multi-channel-based data sending apparatus provided in this embodiment, when selecting an available channel, the apparatus only needs to listen for some channels instead of all channels, which can save resources effectively. In addition, when an initial frame corresponding to to-be-sent data fails to be sent on an available channel, the apparatus can directly reselect an available channel to perform sending again and does not need to wait for a long time, and therefore, a sending delay of data is reduced, thereby improving QoS of a communications system.

FIG. 10 is a schematic structural diagram of a station according to an embodiment of the present invention. The station is configured to implement the multi-channel-based data sending methods shown in FIG. 2, FIG. 3, and FIG. 4. As shown in FIG. 10, the station includes a transceiver 1010, a memory 1020, and a processor 1030 that is connected to the transceiver 1010 and the memory 1020 separately. Certainly, the station may further include general components, such as an antenna, a baseband processing component, an intermediate/radio frequency processing component, and an input/output apparatus. This embodiment of the present invention sets no limitation thereto.

The memory 1020 stores a group of program code, and the processor 1030 is configured to invoke the program code stored in the memory 1020 so as to perform the following operations:
selecting an available channel;
sending, on the available channel, an initial frame corresponding to to-be-sent data;
determining whether a sending state of the initial frame meets a preset condition; and
stopping sending the initial frame if the sending state of the initial frame meets the preset condition; reselecting an available channel and sending the initial frame on the reselected available channel, if the sending state of the initial frame does not meet the preset condition.

Further, the preset condition includes that:
the initial frame is successfully sent.

Further, the preset condition further includes at least one of the following conditions:
a quantity of sending times of the initial frame corresponding to the to-be-sent data reaches a preset quantity of sending times; and a time during which the initial frame corresponding to the to-be-sent data occupies the available channel exceeds a preset time threshold.

The stopping sending the initial frame if the sending state of the initial frame meets the preset condition is specifically: stopping sending the initial frame if the sending state of the initial frame meets at least one condition included in the preset condition; and the reselecting an available channel and sending the initial frame on the reselected available channel, if the sending state of the initial frame does not meet the preset condition is specifically: reselecting an available channel and sending the initial frame on the reselected available channel, if the sending state of the initial frame does not meet all conditions included in the preset conditions.

Further, before the determining whether a sending state of the initial frame meets a preset condition, the processor 1030 invokes the program code stored in the memory 1020 so as further to perform the following operation:
setting the quantity of sending times according to a priority of the to-be-sent data, where the priority of the to-be-sent data is proportional to the quantity of sending times.

Further, the selecting an available channel is specifically:
listening for all channels, and selecting a channel from a currently-idle channel(s) that has completed execution of a backoff process as the available channel; or receiving a channel scheduling instruction sent by a scheduler, and selecting a channel from a channel(s) indicated by the channel scheduling instruction as the available channel.

Further, before the selecting an available channel, the processor 1030 invokes the program code stored in the memory 1020 so as further to perform the following operation:
determining, according to a priority of to-be-sent data, a quantity of channels allowed to be used by the to-be-sent data, where the priority of the to-be-sent data is proportional to the quantity of channels allowed to be used.

Before the determining whether a sending state of the initial frame meets a preset condition, the processor 1030 invokes the program code in the memory 1020 so as further to perform the following operation:
setting the quantity of sending times to the quantity of channels allowed to be used.

Further, the selecting an available channel is specifically:
selecting a channel(s), where a quantity of channel(s) does not exceed a quantity of channels allowed to be used; listening for the channel(s), and selecting, from the channel(s), a currently-idle channel that has completed execution of a backoffprocess as the available channel; or sending a scheduling request to a scheduler, where the scheduling request carries the quantity of channels allowed to be used; receiving a channel scheduling instruction sent by the scheduler, and selecting a channel from a channel(s) indicated by the channel scheduling instruction as the available channel, where a quantity of channel(s) indicated by the channel scheduling instruction does not exceed the quantity of channels allowed to be used.

Further, the initial frame does not carry the to-be-sent data, or carries a part of the to-be-sent data, or carries all of the to-be-sent data.

When the initial frame does not carry the to-be-sent data, after the determining whether a sending state of the initial frame meets a preset condition, the processor 1030 invokes the program code stored in the memory 1020 so as further to perform the following operation:
if the initial frame is successfully sent, sending the to-be-sent data on the channel on which the initial frame is sent.

When the initial frame carries a part of the to-be-sent data, after the determining whether a sending state of the initial frame meets a preset condition, the processor 1030 invokes the program code stored in the memory 1020 so as further to perform the following operation:
if the initial frame is successfully sent, sending, on the channel on which the initial frame is sent, data that is not carried in the initial frame and that is in the to-be-sent data.

By using the station provided in this embodiment, the station selects an available channel, and when a sending state of an initial frame corresponding to to-be-sent data on the available channel does not meet a preset condition, the station can directly reselect an available channel to perform sending and does not need to wait for a long time, and therefore, a sending delay of data is reduced, thereby improving QoS of a communications system.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the spirit and principle of the present invention should fall within the protection scope of the present invention.

## Claims

1. A multi-channel-based data sending method, wherein the method comprises:
determining an available channel(s);
determining, according to a priority of to-be-sent data, a quantity of channels allowed to be used by the to-be-sent data, wherein the priority of the to-be-sent data is proportional to the quantity of channels allowed to be used; and
selecting a channel(s) from the available channel(s) to send an initial frame corresponding to the to-be-sent data, wherein a quantity of channel(s) does not exceed the quantity of channels allowed to be used.

2. The method according to claim 1, wherein the determining an available channel(s) is specifically:
listening for all channels, and determining a currently-idle channel(s) that has completed execution of a backoffprocess as the available channel(s); or
receiving a channel scheduling instruction sent by a scheduler, and determining a channel(s) indicated by the channel scheduling instruction as the available channel(s).

3. The method according to claim 1 or 2, wherein the selecting a channel(s) from the available channel(s) to send an initial frame corresponding to the to-be-sent data is specifically:
sending, on the selected channel(s), one or more identical initial frames corresponding to the to-be-sent data.

4. The method according to any one of claims 1 to 3, wherein an initial frame does not carry the to-be-sent data, or carries a part of the to-be-sent data, or carries all of the to-be-sent data;
when the initial frame does not carry the to-be-sent data, after the selecting a channel(s) from the available channel(s) to send an initial frame corresponding to the to-be-sent data, the method further comprises:
if the initial frame is successfully sent, sending the to-be-sent data on the channel on which the initial frame is sent; and
when the initial frame carries a part of the to-be-sent data, after the selecting a channel(s) from the available channel(s) to send an initial frame corresponding to the to-be-sent data, the method further comprises:
if the initial frame is successfully sent, sending, on the channel on which the initial frame is sent, data that is not carried in the initial frame and that is in the to-be-sent data.

5. A multi-channel-based data sending method, wherein the method comprises:
selecting an available channel;
sending, on the available channel, an initial frame corresponding to to-be-sent data;
determining whether a sending state of the initial frame meets a preset condition; and
stopping sending the initial frame if the sending state of the initial frame meets the preset condition; reselecting an available channel and sending the initial frame on the reselected available channel, if the sending state of the initial frame does not meet the preset condition.

6. The method according to claim 5, wherein the preset condition comprises that:
the initial frame is successfully sent.

7. The method according to claim 6, wherein the preset condition further comprises at least one of the following conditions:
a quantity of sending times of the initial frame reaches a preset quantity of sending times; and a time during which the initial frame occupies the available channel exceeds a preset time threshold;
the stopping sending the initial frame if the sending state of the initial frame meets the preset condition is specifically:
stopping sending the initial frame if the sending state of the initial frame meets at least one condition comprised in the preset condition; and
the reselecting an available channel and sending the initial frame on the reselected available channel, if the sending state of the initial frame does not meet the preset condition is specifically:
reselecting an available channel and sending the initial frame on the reselected available channel, if the sending state of the initial frame does not meet all conditions comprised in the preset condition.

8. The method according to claim 7, wherein before the determining whether a sending state of the initial frame meets a preset condition, the method further comprises:
setting the quantity of sending times according to a priority of the to-be-sent data, wherein the priority of the to-be-sent data is proportional to the quantity of sending times.

9. The method according to any one of claims 5 to 8, wherein the selecting an available channel is specifically:
listening for all channels, and selecting a channel from a currently-idle channel(s) that has completed execution of a backoff process as the available channel; or
receiving a channel scheduling instruction sent by a scheduler, and selecting a channel from a channel(s) indicated by the channel scheduling instruction as the available channel.

10. The method according to claim 7, before the selecting an available channel, the method further comprises:
determining, according to a priority of the to-be-sent data, a quantity of channels allowed to be used by the to-be-sent data, wherein the priority of the to-be-sent data is proportional to the quantity of channels allowed to be used; and
before the determining whether a sending state of the initial frame meets a preset condition, the method further comprises:
setting the quantity of sending times to the quantity of channels allowed to be used.

11. The method according to claim 10, wherein the selecting an available channel is specifically:
selecting a channel(s), wherein a quantity of channel(s) does not exceed the quantity of channels allowed to be used; and
listening for the channel(s), and selecting, from the channel(s), a currently-idle channel that has completed execution of a backoffprocess as the available channel; or
sending a scheduling request to a scheduler, wherein the scheduling request carries the quantity of channels allowed to be used; and
receiving a channel scheduling instruction sent by the scheduler, and selecting a channel from a channel(s) indicated by the channel scheduling instruction as the available channel, wherein a quantity of channel(s) indicated by the channel scheduling instruction does not exceed the quantity of channels allowed to be used.

12. The method according to any one of claims 6 to 11, wherein the initial frame does not carry the to-be-sent data, or carries a part of the to-be-sent data, or carries all of the to-be-sent data;
when the initial frame does not carry the to-be-sent data, after the determining whether a sending state of the initial frame meets a preset condition, the method further comprises:
if the initial frame is successfully sent, sending the to-be-sent data on the channel on which the initial frame is sent; and
when the initial frame carries a part of the to-be-sent data, after the determining whether a sending state of the initial frame meets a preset condition, the method further comprises:
if the initial frame is successfully sent, sending, on the channel on which the initial frame is sent, data that is not carried in the initial frame and that is in the to-be-sent data.

13. A multi-channel-based data sending apparatus, wherein the apparatus comprises:
a first determining unit, configured to determine an available channel(s);
a second determining unit, configured to determine, according to a priority of to-be-sent data, a quantity of channels allowed to be used by the to-be-sent data, wherein the priority of the to-be-sent data is proportional to the quantity of channels allowed to be used; and
a sending unit, configured to select a channel(s) from the available channel(s) to send an initial frame corresponding to the to-be-sent data, wherein a quantity of channel(s) does not exceed the quantity of channels allowed to be used.

14. The apparatus according to claim 13, wherein the first determining unit is specifically configured to:
listen for all channels, and determine a currently-idle channel(s) that has completed execution of a backoffprocess as the available channel(s); or
receive a channel scheduling instruction sent by a scheduler, and determine a channel(s) indicated by the channel scheduling instruction as the available channel(s).

15. The apparatus according to claim 13 or 14, wherein the sending unit is specifically configured to:
send, on the selected channel(s), one or more identical initial frames corresponding to the to-be-sent data.

16. The apparatus according to any one of claims 13 to 15, wherein an initial frame does not carry the to-be-sent data, or carries a part of the to-be-sent data, or carries all of the to-be-sent data;
the sending unit is further configured to: when the initial frame does not carry the to-be-sent data and if the initial frame is successfully sent, send the to-be-sent data on the channel on which the initial frame is sent; and
the sending unit is further configured to: when the initial frame carries a part of the to-be-sent data and if the initial frame is successfully sent, send, on the channel on which the initial frame is sent, data that is not carried in the initial frame and that is in the to-be-sent data.

17. A multi-channel-based data sending apparatus, wherein the apparatus comprises:
a selecting unit, configured to select an available channel;
a sending unit, configured to send, on the available channel, an initial frame corresponding to to-be-sent data; and
a judgment unit, configured to: determine whether a sending state of the initial frame meets a preset condition; wherein
if the sending state of the initial frame meets the preset condition, sending of the initial frame is stopped; and if the sending state of the initial frame does not meet the preset condition, the selecting unit reselects an available channel and the sending unit sends the initial frame on the reselected available channel.

18. The apparatus according to claim 17, wherein the preset condition comprises that:
the initial frame is successfully sent.

19. The apparatus according to claim 18, wherein the preset condition further comprises at least one of the following conditions:
a quantity of sending times of the initial frame reaches a preset quantity of sending times; and
a time during which the initial frame occupies the available channel exceeds a preset time threshold;
that the sending state of the initial frame meets the preset condition is specifically that: the sending state of the initial frame meets at least one condition comprised in the preset condition; and
that the sending state of the initial frame does not meet the preset condition is specifically that: the sending state of the initial frame does not meet all conditions comprised in the preset condition.

20. The apparatus according to claim 19, wherein the apparatus further comprises:
a setting unit, configured to set the quantity of sending times according to a priority of the to-be-sent data, wherein the priority of the to-be-sent data is proportional to the quantity of sending times.

21. The apparatus according to claims 17 to 20, wherein the selecting unit is specifically configured to:
listen for all channels, and select a channel from a currently-idle channel(s) that has completed execution of a backoff process as the available channel; or
receive a channel scheduling instruction sent by a scheduler, and select a channel from a channel(s) indicated by the channel scheduling instruction as the available channel.

22. The apparatus according to claim 19, wherein the apparatus further comprises:
a determining unit, configured to determine, according to a priority of the to-be-sent data, a quantity of channels allowed to be used by the to-be-sent data, wherein the priority of the to-be-sent data is proportional to the quantity of channels allowed to be used; and
a setting unit, configured to set the quantity of sending times to the quantity of channels allowed to be used.

23. The apparatus according to claim 22, wherein the selecting unit is specifically configured to:
select a channel(s), wherein a quantity of channel(s) does not exceed the quantity of channels allowed to be used; and
listen for the channel(s), and select, from the channel(s), a currently-idle channel that has completed execution of a backoff process as the available channel; or
send a scheduling request to a scheduler, wherein the scheduling request carries the quantity of channels allowed to be used; and
receive a channel scheduling instruction sent by the scheduler, and select a channel from a channel(s) indicated by the channel scheduling instruction as the available channel, wherein a quantity of channel(s) indicated by the channel scheduling instruction does not exceed the quantity of channels allowed to be used.

24. The apparatus according to claims 18 to 23, wherein the initial frame does not carry the to-be-sent data, or carries a part of the to-be-sent data, or carries all of the to-be-sent data;
the sending unit is further configured to: when the initial frame does not carry the to-be-sent data and if the initial frame is successfully sent, send the to-be-sent data on the channel on which the initial frame is sent; and
the sending unit is further configured to: when the initial frame carries a part of the to-be-sent data and if the initial frame is successfully sent, send, on the channel on which the initial frame is sent, data that is not carried in the initial frame and that is in the to-be-sent data.

25. A station, wherein the station comprises:
a processor; and
a memory, wherein
the memory is configured to store program code, and the processor is configured to invoke the program code in the memory so as to perform the following operations:
determining an available channel(s);
determining, according to a priority of to-be-sent data, a quantity of channels allowed to be used by the to-be-sent data, wherein the priority of the to-be-sent data is proportional to the quantity of channels allowed to be used; and
selecting a channel(s) from the available channel(s) to send an initial frame corresponding to the to-be-sent data, wherein a quantity of channel(s) does not exceed the quantity of channels allowed to be used.

26. The station according to claim 25, wherein the determining an available channel is specifically:
listening for all channels, and determining a currently-idle channel(s) that has completed execution of a backoffprocess as the available channel(s); or
receiving a channel scheduling instruction sent by a scheduler, and determining a channel(s) indicated by the channel scheduling instruction as the available channel(s).

27. The station according to claim 25 or 26, wherein the selecting a channel(s) from the available channel(s) to send an initial frame corresponding to the to-be-sent data is specifically:
sending, on the selected channel(s), one or more identical initial frames corresponding to the to-be-sent data.

28. The station according to any one of claims 25 to 27, wherein an initial frame does not carry the to-be-sent data, or carries a part of the to-be-sent data, or carries all of the to-be-sent data;
when the initial frame does not carry the to-be-sent data, after the selecting a channel(s) from the available channel(s) to send an initial frame corresponding to the to-be-sent data, the processor invokes the program code in the memory so as further to perform the following operation:
if the initial frame is successfully sent, sending the to-be-sent data on the channel on which the initial frame is sent; and
when the initial frame carries a part of the to-be-sent data, after the selecting a channel(s) from the available channel(s) to send an initial frame corresponding to the to-be-sent data, the processor invokes the program code in the memory so as further to perform the following operation:
if the initial frame is successfully sent, sending, on the channel on which the initial frame is sent, data that is not carried in the initial frame and that is in the to-be-sent data.

29. A station, wherein the station comprises:
a processor; and
a memory, wherein
the memory is configured to store program code, and the processor is configured to invoke the program code in the memory so as to perform the following operations:
selecting an available channel;
sending, on the available channel, an initial frame corresponding to to-be-sent data;
determining whether a sending state of the initial frame meets a preset condition; and
stopping sending the initial frame if the sending state of the initial frame meets the preset condition; reselecting an available channel and sending the initial frame on the reselected available channel, if the sending state of the initial frame does not meet the preset condition.

30. The station according to claim 29, wherein the preset condition comprises that:
the initial frame is successfully sent.

31. The station according to claim 30, wherein the preset condition further comprises at least one of the following conditions:
a quantity of sending times of the initial frame corresponding to the to-be-sent data reaches a preset quantity of sending times; and
a time during which the initial frame corresponding to the to-be-sent data occupies the available channel exceeds a preset time threshold;
the stopping sending the initial frame if the sending state of the initial frame meets the preset condition is specifically:
stopping sending the initial frame if the sending state of the initial frame meets at least one condition comprised in the preset condition; and
the reselecting an available channel and sending the initial frame on the reselected available channel, if the sending state of the initial frame does not meet the preset condition is specifically:
reselecting an available channel and sending the initial frame on the reselected available channel, if the sending state of the initial frame does not meet all conditions comprised in the preset condition.

32. The station according to claim 31, before the determining whether a sending state of the initial frame meets a preset condition, the processor invokes the program code in the memory so as further to perform the following operation:
setting the quantity of sending times according to a priority of the to-be-sent data, wherein the priority of the to-be-sent data is proportional to the quantity of sending times.

33. The station according to any one of claims 29 to 32, wherein the selecting an available channel is specifically:
listening for all channels, and selecting a channel from a currently-idle channel(s) that has completed execution of a backoff process as the available channel; or
receiving a channel scheduling instruction sent by a scheduler, and selecting a channel from a channel(s) indicated by the channel scheduling instruction as the available channel.

34. The station according to claim 31, before the selecting an available channel, the processor invokes the program code in the memory so as further to perform the following operation:
determining, according to a priority of to-be-sent data, a quantity of channels allowed to be used by the to-be-sent data, wherein the priority of the to-be-sent data is proportional to the quantity of channels allowed to be used; and
before the determining whether a sending state of the initial frame meets a preset condition, the processor invokes the program code in the memory so as further to perform the following operation:
setting the quantity of sending times to the quantity of channels allowed to be used.

35. The station according to claim 34, wherein the selecting an available channel is specifically:
selecting a channel(s), wherein a quantity of channel(s) does not exceed the quantity of channels allowed to be used; and
listening for the channel(s), and selecting, from the channel(s), a currently-idle channel that has completed execution of a backoffprocess as the available channel; or
sending a scheduling request to a scheduler, wherein the scheduling request carries the quantity of channels allowed to be used; and
receiving a channel scheduling instruction sent by the scheduler, and selecting a channel from a channel(s) indicated by the channel scheduling instruction as the available channel, wherein a quantity of channel(s) indicated by the channel scheduling instruction does not exceed the quantity of channels allowed to be used.

36. The station according to any one of claims 30 to 35, wherein the initial frame does not carry the to-be-sent data, or carries a part of the to-be-sent data, or carries all of the to-be-sent data;
when the initial frame does not carry the to-be-sent data, after the determining whether a sending state of the initial frame meets a preset condition, the processor invokes the program code in the memory so as further to perform the following operation:
if the initial frame is successfully sent, sending the to-be-sent data on the channel on which the initial frame is sent; and
when the initial frame carries a part of the to-be-sent data, after the determining whether a sending state of the initial frame meets a preset condition, the processor invokes the program code in the memory so as further to perform the following operation:
if the initial frame is successfully sent, sending, on the channel on which the initial frame is sent, data that is not carried in the initial frame and that is in the to-be-sent data.
